# EUROPEAN PATENT APPLICATION

(11) **EP 3 306 959 A1**
(43) Date of publication of application: **11.04.2018**
(21) Application number: 16306339.9
(22) Date of filing: 10.10.2016
(51) Int. Cl.: H04W 4/00

(54) **INTEGRATION OF M2M APPLICATION DATA DELIVERY VIA A SCEF, WITH A M2M SERVICE LAYER ARCHITECTURE**

(71) Applicant: Nokia Technologies Oy, 02610 Espoo (FI)
(72) Inventor: ELLOUMI, Omar, 91620 Nozay (FR); GÖRMER, Gerald, 16348 Wandlitz (DE); HE, Xuan, Beijing 100102 (CN)
(74) Representative: El Manouni, Josiane

(57) **Abstract**

Embodiments of the invention include a User Equipment UE, configured to:
- add to M2M application data to be delivered towards a M2M SCS via a SCEF, interworking information allowing an Interworking Function associated with the SCEF to translate a NIDD Request for delivery of said M2M application data, received by the SCEF, into a request referred to as M2M NIDD Request enabling a M2M application entity in the UE to use services provided by a M2M application services entity in the M2M SCS, sent by said Interworking Function.

## Description

The present invention generally relates to communications such as M2M (Machine-to-Machine) communications, also called loT (Internet of Things) communications, or also called MTC (Machine Type Communication), over networks or systems such as mobile networks or systems.

Descriptions of networks or systems can be found in the literature, such as in particular in Technical Specifications published by standardization bodies such as 3GPP (3^{rd} Generation Partnership Project).

An example of 3GPP system is EPS (Evolved Packet System), specified in particular in 3GPP TS 23.401.

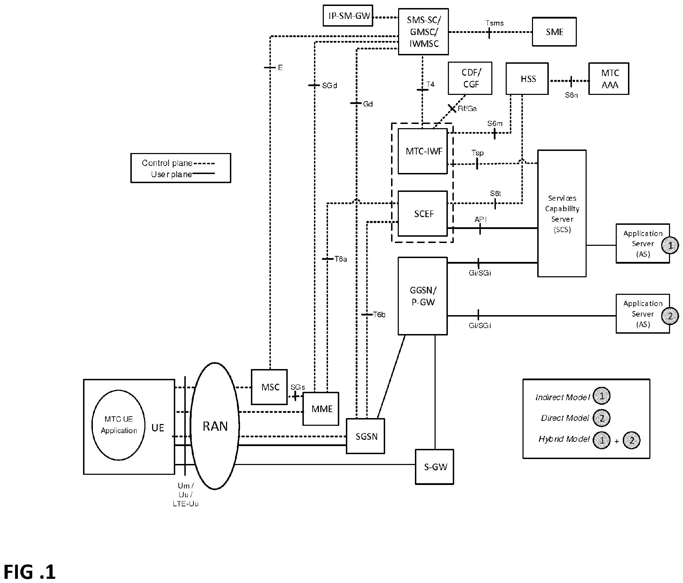

An example of architecture for MTC over a 3GPP network is recalled in Figure 1 taken from 3GPP TS 23.682. The end-to-end communication between the MTC Application in the UE (User equipment) and the MTC Application in the external network uses services provided by a 3GPP system, and optionally services provided by a Services Capability Server (SCS). The MTC Application in the external network is typically hosted by an Application Server (AS) and may make use of an SCS for additional value added services. The 3GPP system provides transport, subscriber management and other communication services.

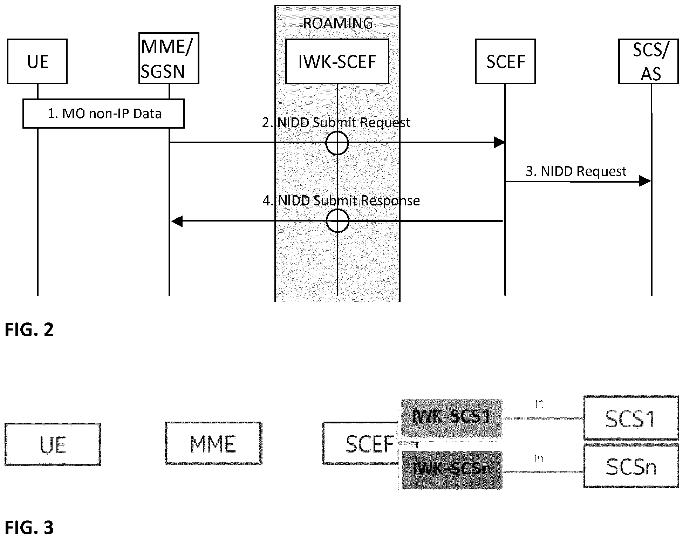

As part of Control Plane CloT (Cellular loT) EPS optimizations providing improved support of small data transfer, a mechanism of Non-IP Data Delivery (NIDD) via a SCEF (Service Capability Exposure Function) has been introduced in 3GPP TS 23.682. For example, a mobile originated NIDD procedure is recalled in figure 2 taken from 3GPP TS 23.682. When the UE has small date to transfer (e.g. to report M2M small data), the UE encapsulates the data in a NAS PDU towards the MME, the MME then sends the non-IP data to the SCEF in a NIDD Submit Request message, and the SCEF sends the non-IP data to the appropriate SCS/AS.

Descriptions of M2M communications can be found in the literature, such as in particular in Technical Specifications published by standardization bodies such as oneM2M (Standards for M2M and the Internet of Things), or OMA LWM2M (Open Mobile Alliance Light Weight M2M). Reference can be made for example to Technical Specification oneM2M TS 0001, which describes the end-to-end oneM2M functional architecture, including the description of the functional entities and associated reference points. Those include a reference point between AE (Application Entity) and application services entity called CSE (Common Services Entity). This oneM2M functional architecture focuses on the Service Layer aspects and takes Underlying Network-independent view of the end-to-end services. The Underlying Network is used for the transport of data and potentially for other services.

As recognized by the inventors, the current state of the art fails to provide integration of M2M small data delivery via a SCEF, with a M2M service layer architecture such as the oneM2M functional architecture. As recognized by the inventors, there is a need to allow for such integration. More generally there is a need to improve M2M communications.

Embodiments of the present invention in particular address such needs.

These and other objects are achieved, in one aspect, by a User Equipment UE, configured to:
- add to M2M application data to be delivered towards a M2M SCS via a SCEF, interworking information allowing an Interworking Function associated with the SCEF to translate a NIDD Request for delivery of said M2M application data, received by the SCEF, into a request referred to as M2M NIDD Request enabling a M2M application entity in the UE to use services provided by a M2M application services entity in the M2M SCS, sent by said Interworking Function.

These and other objects are achieved, in another aspect, by an Interworking Function associated with a SCEF, configured to perform at least one of:
- translate a NIDD Request for delivery of M2M application data from a UE towards a M2M SCS, received at the SCEF, into a request referred to as M2M NIDD Request for enabling a M2M application entity in the UE to use services provided by a M2M application services entity in the M2M SCS, sent by said Interworking Function,
- translate a request referred to as M2M NIDD Request for enabling a M2M application services entity in the M2M SCS to communicate with an application entity in a UE, received by said Interworking Function, into a NIDD Request for delivery of M2M application data from the M2M SCS towards the UE, sent by the SCEF.

These and other objects are achieved, in another aspect, by a M2M Services Capability Server SCS, configured to:
- provide to an Interworking Function associated with a SCEF, context information allowing at least one of:
   -- translate a NIDD Request for delivery of M2M application data from a UE towards a M2M SCS, received at the SCEF, into a request referred to as M2M NIDD Request for enabling a M2M application entity in the UE to use services provided by a M2M application services entity in the M2M SCS, sent by said Interworking Function,
   -- translate a request referred to as M2M NIDD Request for enabling a M2M application services entity in the M2M SCS to communicate with an application entity in a UE, received by said Interworking Function, into a NIDD Request for delivery of M2M application data from the M2M SCS towards the UE, sent by the SCEF.

These and other objects are achieved, in another aspect, by a Service Capability Exposure Function SCEF, configured to:
- provide to an Interworking Function IWK-SCS associated with the SCEF, information allowing the IWK-SCS to perform at least one of:
   -- translate a NIDD Request for delivery of M2M application data from a UE towards a M2M SCS, received at the SCEF, into a request referred to as M2M NIDD Request for enabling a M2M application entity in the UE to use services provided by a M2M application services entity in the M2M SCS, sent by said Interworking Function,
   -- translate a request referred to as M2M NIDD Request for enabling a M2M application services entity in the M2M SCS to communicate with an application entity in a UE, received by said Interworking Function, into a NIDD Request for delivery of M2M application data from the M2M SCS towards the UE, sent by the SCEF.

These and other objects are achieved, in another aspect, by a method for integration of M2M application data delivery via a SCEF, with a M2M service layer architecture, said method including at least one step performed by at least one of thus configured entities: User Equipment UE, Interworking Function IWK-SCS, Services Capability Server SCS, Service Capability Exposure Function SCEF.

Some embodiments of apparatus and/or methods in accordance with embodiments of the present invention are now described, by way of example only, and with reference to the accompanying drawings, in which:
- Figure 1 is intended to recall an example of 3GPP architecture for MTC (Machine Type Communication),
- Figure 2 is intended to recall an example of signaling flow for MO NIDD (Mobile Originated Non-IP Data Delivery) procedure,
- Figure 3 is intended to illustrate in a simplified way an example of entities which may be involved in the integration of M2M application data delivery via a SCEF, with a M2M service layer architecture, according to embodiments of the invention,
- Figure 4 is intended to illustrate in a simplified way an example of a sequence of flows according to embodiments of the invention,
- Figure 5 is intended to illustrate in a simplified way an example of NIDD Request payload, according to embodiments of the invention,
- Figure 6 is intended to illustrate in a simplified way an example of context information, for the case of oneM2M, according to embodiments of the invention,
- Figure 7 is intended to illustrate in a simplified way an example of message flows with the corresponding context information, for the case of oneM2M, according to embodiments of the invention
- Figure 8 is intended to illustrate in a simplified way an example of context information, for the case of LWM2M, according to embodiments of the invention,
- Figure 9 is intended to illustrate in a simplified way a second example of message flows with the corresponding context information, for the case of LWM2M, according to embodiments of the invention.

### Abbreviations

- AS: Application Server
- EBI: EPS Bearer Identity
- EPS: Evolved Packet System
- HTTP: Hyper Text Transfer Protocol
- IMSI: International Mobile Subscriber Identity
- loT: Internet of Things
- IWF-SCS: InterWorking Function-SCS
- LWM2M: LightWeight M2M
- M2M: Machine-To-Machine
- MME: Mobility Management Entity
- MTC: Machine Type Communication
- NB-loT: Narrow Band-loT
- NIDD: Non-IP Data Delivery
- SCEF: Service Capability Exposure Function
- SCS: Service Capability Server
- UE: User Equipment
- URI: Uniform Resource Identifier
- XML: extensible Markup Language

### Description of various aspects and/or embodiments of the invention

In the following description, oneM2M and LWM2M will be considered by way of example. However, embodiments of the invention are not limited to such example. More generally embodiments of the invention apply to M2M.

oneM2M and LWM2M specify a service layer that sits on top of a core network (such as 3GPP core network). Devices and Gateways connecting to a oneM2M or LWM2M server (loT server) are expected to exchange the delivered data according to oneM2M interfaces, using HTTP, CoAP or MQTT-SN protocols with XML or JSON representations.

In 3GPP as part of the CloT EPS optimization, a new function known as SCEF allows NB-loT devices sending application data to the loT server. The SCEF is defined by 3GPP to provide a set of reference points to expose service capabilities of the 3GPP system to the SCS. The SCEF allows to bridge between NB-loT devices sending small Non-IP application data payloads and the loT server.

But no interworking mechanism between SCEF and SCS (such as oneM2M and LWM2M server) is currently defined. In other words, it is currently not possible to assume the oneM2M/LWM2M interface can work on top of the Non-IP Data Delivery (NIDD) bearer specified in 3GPP TS 23.682. Still in other words, there is currently no integration between SCEF and oneM2M/LWM2M.

Embodiments of the invention are intended to address this integration issue, allowing NB-loT devices to send/receive small Non-IP data to an loT server via SCEF. Embodiments of the invention are related to the operation control mechanism for application data delivery between NB-loT devices and loT service providers, especially for Non-IP small data delivery, which can be widely used in massive deployment use cases (e.g. smart meter, smart cities). The SCEF can be seen as the demarcation point between Non-IP data and IP data.

In some embodiments, a new function is introduced, associated (e.g. collocated) with the SCEF, that allows translation between a Non-IP payload and a oneM2M/LWM2M request/response. This function will also be called Interworking Function SCS and will also be noted as IWK-SCS.

In some embodiments, context information is established in such IWF-SCS, allowing such translation. Such context information may be installed offline e.g. following device registration process to the oneM2M/LWM2M service layer.

Embodiments of the invention can be applied to any loT server, referred to as SCS in 3GPP. In this description, by way of example the SCS may be a oneM2M server or LWM2M server.

In this description, by way of example different SCSs (noted SCS1, ...SCSn) may be used, allowing an operator to provide different services to a user.

In some embodiments, a part of the NB-loT payload may be used to provide information needed to identify the context needed to generate from the SCEF a oneM2M/LWM2M request, and vice versa.

Referring to the embodiment illustrated in figure 3:
- IWK-SCS may be seen as a technology (SCS) specific interworking function, that takes in incoming NIDD Submit Request and converts (or translate) it into SCS specific NIDD Request (and vice versa)
- I1..In interfaces may e.g. be used for sending simple sensor measurements for upstream interactions or simple commands for downstream interactions
- IWK-SCS may maintain context information to convert a NIDD Submit Request into an SCS specific NIDD Request
- Such context information should be configured prior to operations, it is outside 3GPP scope.

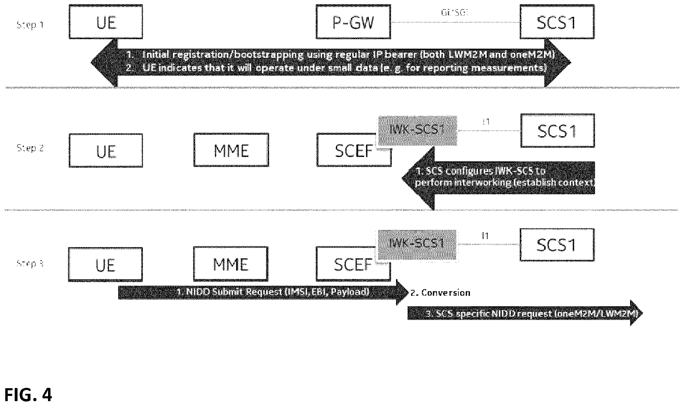

Referring to the embodiment illustrated in figure 4, a sequence of flows may comprise following steps:
In Step1 the device (UE) may register to the Service Capability Server (SCS1 in this case) using a regular IP based bearer. It will create the resources needed to report data such as measurements, or create the resouces to receive commands (those are known as container resources in oneM2M).The UE may indicate that it will operate under small data (e.g. for reporting measurements).

In Step2 the SCS may install in the IWK-SCS (piece of software which may be colocated with the SCEF) a context information needed to ensure conversion can take place for both upstream and backstream packets. In other words, the SCS configures the IWK-SCS to perform such conversion (or translation).

In Step3 the IWK-SCS may make conversion between the NIDD submit Request (that will also be called more simply NIDD Request) received by the SCEF for the Mobile Originated MO case, respectively sent by the SCEF for the Mobile Terminated MT case), and the SCS specific NIDD Request (that will also be called M2M NIDD Request (e.g. oneM2M NIDD Request, or LWM2M NIDD Request) sent by the IWK-SCS for the MO case, resepctively received by the IWK-SCS for the MT case.

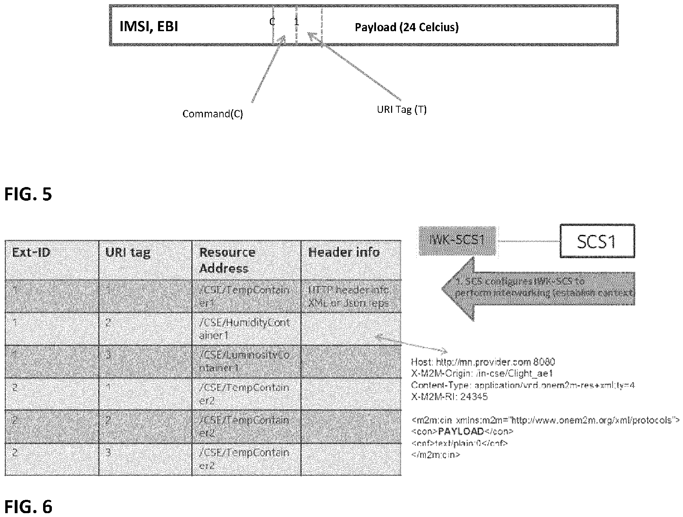

As illustrated in figure 5, the NIDD Request payload may contain IMSI and EBI (3GPP specific information) and an application level payload (generated by the UE, e.g. a temperature measurement as illustrated in the example of figure 5).

Referring to the embodiment illustrated in figure 5:
The NIDD Request payload may contain information (that will also be called interworking information), e.g. two bytes of the NIDD Submit Request payload may be provided, containing:
   - 1 byte of Command (C) may be assigned to indicate command identified, which needs to be executed at the SCS (e.g. C=Create in oneM2M case, C=POST in LWM2M case).
   - 1 byte of URI Tag (T) may allow to identify the context needed to convert to oneM2M/LWM2M specific NIDD Request. After a UE registered, a specified UE Tag table may be created for the UE. The resource type of this UE can be recorded in this UE Tag table.

Those two fields may be considered as part of the payload, therefore not interpreted by the 3GPP core network element but only interpreted by the IWK-SCS function.

An example of context information that is installed in the IWK-SCS function (e.g. as described in above-mentioned step 2 by the SCS) is illustrated in figure 6 for the oneM2M case. The context information may contain one or more of following information.

The External Identifier (Ext-Id) may refer to user identity used by the SCS. A subscription associated to an IMSI may have one or several External Identifiers. The SCEF can map the External Identifier to the IMSI contained in a NIDD Request payload, or vice versa. The example of two Ext-Ids (e.g. noted "1" and "2") is illustrated in figure 6.

The URI tag may correspond to the tag transported in the NIDD Request. The IWK-SCS function may use the URI tag to translate into a Resource Address (or resource URI) used afterwards in the NIDD Request generated towards the oneM2M/LWM2M server. For example, as illustrated in figure , URI tag 1 may be associated with a container containing a temperature measurement (resource address noted for example /CSE/TempContainer1 for Ext-ID "1"), URI tag 2 may be associated with a container containing a humidity measurement (resource address noted for example /CSE/HumidityContainer1 for Ext-ID "1 "), URI tag 3 may be associated with a container containing a luminosity measurement (resource address noted for example /CSE/LuminosityContainer1 for Ext-ID "1 ").

The Header Info may comprise information such as HTTP header info, XML or Json reps, generally used for exchange of messages for data manipulation in a standardized resource structure.

In case the NIDD Submit Request indicates the need for an acknowledgment, the IWK-SCS should send such an acknowledgment as NIDD Submit Response.

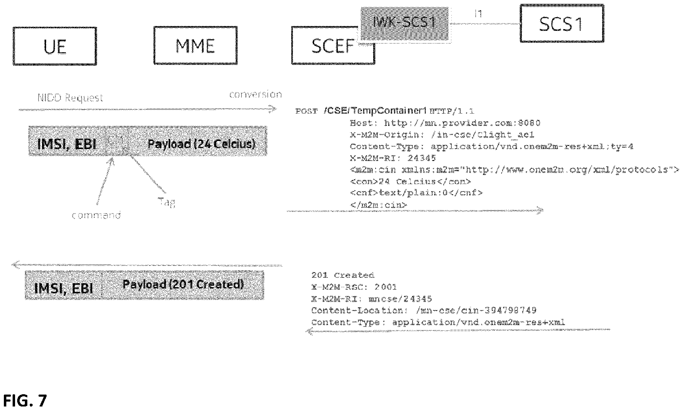

An example of a complete message flow with an optional acknowledgement , for the oneM2M case, is depicted in figure 7

Figure 7 shows, byway of example, a NIDD Request containing a payload as illustrated in the example of figure 5.

Figure 7 also shows, byway of example, conversion (or translation) of this NIDD request into a oneM2M NIDD Request (using context information as illustrated in the example of figure 6).

Figure 7 also shows, by way of example, an acknowledgement (or response to the request).

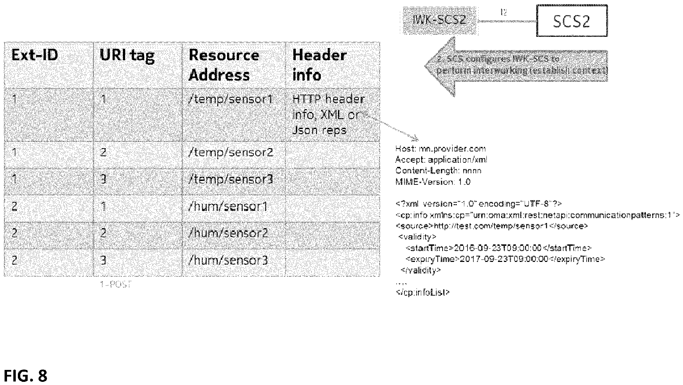

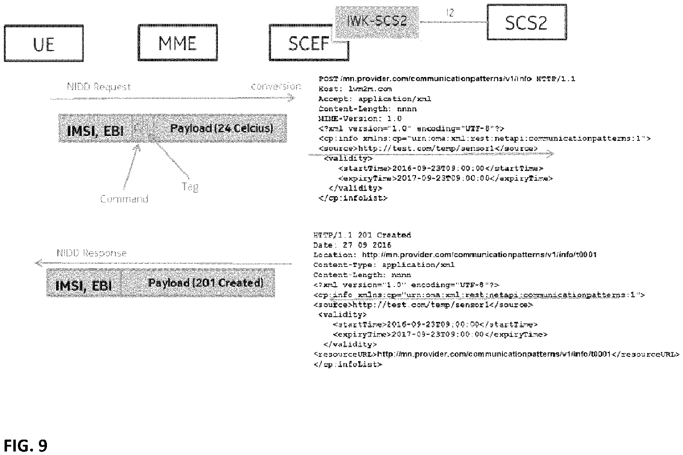

Figures 8, 9 are similar to figures 6, 7, except that they relate to the LWM2M case instead of the oneM2M case.

Various aspects and/or embodiments of the invention include (though not being limited to) following aspects and/or embodiments.

Some aspects are related to a User Equipment UE.

Various embodiments are provided, including (though not being limited to) following embodiments, which may be taken alone or in combination, according to various combinations.

In an embodiment, said User Equipment is configured to:
- add to M2M application data to be delivered towards a M2M SCS via a SCEF, interworking information allowing an Interworking Function associated with the SCEF to translate a NIDD Request for delivery of said M2M application data, received by the SCEF, into a request referred to as M2M NIDD Request enabling a M2M application entity in the UE to use services provided by a M2M application services entity in the M2M SCS, sent by said Interworking Function.

In an embodiment:
- said interworking information includes first interworking information allowing to identify context information needed for said translation.

In an embodiment:
- said interworking information includes second interworking information indicating a type of operation to be executed on said M2M application data.

In an embodiment, said User Equipment is configured to:
- add said interworking information to said M2M application data, in a NAS PDU.

In an embodiment, said User Equipment is configured to:
- receive said context information at configuration, such as at registration of the UE to services provided by the application services entity,
- associate to said context information, first interworking information allowing said Interworking Function to identify said context information.

In an embodiment, said User Equipment is configured to:
- indicate, such as at configuration, such as at registration of the UE to services provided by the application services entity, that the UE will operate in a mode requiring said translation.

Other aspects are related to an Interworking Function associated with a SCEF.

Various embodiments are provided, including (though not being limited to) following embodiments, which may be taken alone or in combination, according to various combinations.

In an embodiment, said Interworking Function is configured to perform at least one of:
- translate a NIDD Request for delivery of M2M application data from a UE towards a M2M SCS, received at the SCEF, into a request referred to as M2M NIDD Request for enabling a M2M application entity in the UE to use services provided by a M2M application services entity in the M2M SCS, sent by said Interworking Function,
- translate a request referred to as M2M NIDD Request for enabling a M2M application services entity in the M2M SCS to communicate with an application entity in a UE, received by said Interworking Function, into a NIDD Request for delivery of M2M application data from the M2M SCS towards the UE, sent by the SCEF.

In an embodiment, said Interworking Function is configured to:
- perform said translation based on context information installed in said Interworking Function.

In an embodiment, said Interworking Function is configured to:
- receive said context information at configuration, such as at registration of the UE to services provided by the M2M application services entity.

In an embodiment, said Interworking Function is configured to:
- associate said context information to first interworking information used in a received NIDD Request to identify context information needed for translation of said NIDD Request.

In an embodiment, said Interworking Function is configured to:
- identify context information needed for translation of a received NIDD Request, based on said first interworking information contained in said NIDD Request.

In an embodiment, said Interworking Function is configured to:
- perform translation of a received NIDD Request, using second interworking information provided in said received NIDD Request to indicate a type of operation to be executed on the M2M application data contained in said received NIDD Request.

Other aspects are related to a Services Capability Server SCS.

Various embodiments are provided, including (though not being limited to) following embodiments, which may be taken alone or in combination, according to various combinations.

In an embodiment, said Services Capability Server SCS is configured to:
- provide to an Interworking Function associated with a SCEF, context information allowing at least one of:
   -- translate a NIDD Request for delivery of M2M application data from a UE towards a M2M SCS, received at the SCEF, into a request referred to as M2M NIDD Request for enabling a M2M application entity in the UE to use services provided by a M2M application services entity in the M2M SCS, sent by said Interworking Function,
   -- translate a request referred to as M2M NIDD Request for enabling a M2M application services entity in the M2M SCS to communicate with an application entity in a UE, received by said Interworking Function, into a NIDD Request for delivery of M2M application data from the M2M SCS towards the UE, sent by the
   SCEF.

In an embodiment, said Services Capability Server SCS is configured to:
- provide said context information at configuration, such as at registration of the UE to services provided by the M2M application services entity.

In an embodiment, said Services Capability Server SCS is configured to:
- provide said context information upon reception of an indication that the UE will operate in a mode requiring said translation.

Other aspects are related to a Service Capability Exposure Function SCEF.

Various embodiments are provided, including (though not being limited to) following embodiments, which may be taken alone or in combination, according to various combinations.

In an embodiment, said Service Capability Exposure Function SCEF is configured to:
- provide to an Interworking Function IWK-SCS associated with the SCEF, information allowing the IWK-SCS to perform at least one of:
   -- translate a NIDD Request for delivery of M2M application data from a UE towards a M2M SCS, received at the SCEF, into a request referred to as M2M NIDD Request for enabling a M2M application entity in the UE to use services provided by a M2M application services entity in the M2M SCS, sent by said Interworking Function,
   -- translate a request referred to as M2M NIDD Request for enabling a M2M application services entity in the M2M SCS to communicate with an application entity in a UE, received by said Interworking Function, into a NIDD Request for delivery of M2M application data from the M2M SCS towards the UE, sent by the SCEF.

In an embodiment:
- said information include information related to a mapping between an IMSI and an External Identifier.

Other aspects are related to a method for integration of M2M application data delivery via a SCEF, with a M2M service layer architecture, said method comprising at least one step performed by at least one of thus configured entities, such as (although not limited to): User Equipment, Interworking Function, Services Capability Server, Service Capability Exposure Function.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A User Equipment UE, configured to:
- add to M2M application data to be delivered towards a M2M SCS via a SCEF, interworking information allowing an Interworking Function associated with the SCEF to translate a NIDD Request for delivery of said M2M application data, received by the SCEF, into a request referred to as M2M NIDD Request enabling a M2M application entity in the UE to use services provided by a M2M application services entity in the M2M SCS, sent by said Interworking Function.

2. A User Equipment according to claim 1, wherein:
- said interworking information includes first interworking information allowing to identify context information needed for said translation.

3. A User Equipment according to claim 1 or 2, wherein:
- said interworking information includes second interworking information indicating a type of operation to be executed on said M2M application data.

4. A User Equipment according to any of claims 1 to 3, configured to:
- add said interworking information to said M2M application data, in a NAS PDU.

5. A User Equipment according to any of claims 2 to 4, configured to:
- receive said context information at configuration, such as at registration of the UE to services provided by the application services entity,
- associate to said context information, first interworking information allowing said Interworking Function to identify said context information.

6. A User Equipment according to any of claims 1 to 5, configured to:
- indicate, such as at configuration, such as at registration of the UE to services provided by the application services entity, that the UE will operate in a mode requiring said translation.

7. An Interworking Function associated with a SCEF, configured to perform at least one of:
- translate a NIDD Request for delivery of M2M application data from a UE towards a M2M SCS, received at the SCEF, into a request referred to as M2M NIDD Request for enabling a M2M application entity in the UE to use services provided by a M2M application services entity in the M2M SCS, sent by said Interworking Function,
- translate a request referred to as M2M NIDD Request for enabling a M2M application services entity in the M2M SCS to communicate with an application entity in a UE, received by said Interworking Function, into a NIDD Request for delivery of M2M application data from the M2M SCS towards the UE, sent by the SCEF.

8. An Interworking Function according to claim 7, configured to:
- perform said translation based on context information installed in said Interworking Function.

9. An Interworking Function according to claim 8, configured to:
- receive said context information at configuration, such as at registration of the UE to services provided by the M2M application services entity.

10. An Interworking Function according to claim 8 or 9, configured to:
- associate said context information to first interworking information used in a received NIDD Request to identify context information needed for translation of said NIDD Request.

11. An Interworking Function according to claim 10, configured to:
- identify context information needed for translation of a received NIDD Request, based on said first interworking information contained in said NIDD Request.

12. An Interworking Function according to any of claims 7 to 11, configured to:
- perform translation of a received NIDD Request, using second interworking information provided in said received NIDD Request to indicate a type of operation to be executed on the M2M application data contained in said received NIDD Request.

13. A M2M Services Capability Server, configured to:
- provide to an Interworking Function associated with a SCEF, context information allowing at least one of:
-- translate a NIDD Request for delivery of M2M application data from a UE towards a M2M SCS, received at the SCEF, into a request referred to as M2M NIDD Request for enabling a M2M application entity in the UE to use services provided by a M2M application services entity in the M2M SCS, sent by said Interworking Function,
-- translate a request referred to as M2M NIDD Request for enabling a M2M application services entity in the M2M SCS to communicate with an application entity in a UE, received by said Interworking Function, into a NIDD Request for delivery of M2M application data from the M2M SCS towards the UE, sent by the SCEF.

14. A M2M Services Capability Server according to claim 13, configured to:
- provide said context information at configuration, such as at registration of the UE to services provided by the M2M application services entity.

15. A M2M Services Capability Server according to claim 13 or 14, configured to:
- provide said context information upon reception of an indication that the UE will operate in a mode requiring said translation.

16. A Service Capability Exposure Function SCEF, configured to:
- provide to an Interworking Function IWK-SCS associated with the SCEF, information allowing the IWK-SCS to perform at least one of:
-- translate a NIDD Request for delivery of M2M application data from a UE towards a M2M SCS, received at the SCEF, into a request referred to as M2M NIDD Request for enabling a M2M application entity in the UE to use services provided by a M2M application services entity in the M2M SCS, sent by said Interworking Function,
-- translate a request referred to as M2M NIDD Request for enabling a M2M application services entity in the M2M SCS to communicate with an application entity in a UE, received by said Interworking Function, into a NIDD Request for delivery of M2M application data from the M2M SCS towards the UE, sent by the SCEF.

17. A Service Capability Exposure Function SCEF, wherein:
- said information include information related to a mapping between an IMSI and an External Identifier.

18. A method for integration of M2M application data delivery via a SCEF, with a M2M service layer architecture, said method including at least one step performed by at least one of: a User Equipment UE according to any of claims 1 to 6, an Interworking Function according to any of claims 7 to 12, a Services Capability Server according to any of claims 13 to 15, a Service Capability Exposure Function SCEF according to any of claims 16 or 17.
